(19) Europäisches Patentamt
European Patent Office
Office européen des brevets

(11) **EP 1 873 118 A1**

(12) **EUROPEAN PATENT APPLICATION**
published in accordance with Art. 153(4) EPC

(43) Date of publication:
**02.01.2008 Bulletin 2008/01**

(51) Int Cl.:
*C01G 51/00* (2006.01)   *C09D 17/00* (2006.01)

(21) Application number: **06730085.5**

(22) Date of filing: **27.03.2006**

(86) International application number:
**PCT/JP2006/306137**

(87) International publication number:
**WO 2006/106623 (12.10.2006 Gazette 2006/41)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.04.2005 JP 2005106124**

(71) Applicant: **Mitsui Mining and Smelting Co., Ltd Shinagawa-ku, Tokyo 141-8584 (JP)**

(72) Inventors:
• **Katsuyama, Koichi**
**Tamano-shi,**
**Okayama 7060027 (JP)**
• **Nakashima, Takashi**
**Tamano-shi,**
**Okayama 7060027 (JP)**
• **Shimamura, Hiroyuki**
**Shinagawa-ku,**
**Tokyo 1418584 (JP)**

(74) Representative: **Boeters, Hans Dietrich et al**
**BOETERS & LIECK**
**Oberanger 32**
**80331 München (DE)**

(54) **BLACK DOUBLE OXIDE PARTICLES, PROCESS FOR PRODUCTION THEREOF, BLACK PASTES, AND BLACK MATRIXES**

(57)   The complex oxide particles of the present invention have a black hue, and contains 35 to 70 % by weight of cobalt and 5 to 40 % by weight of manganese. The molar ratio of cobalt to manganese Co/Mn is 0.5 to 14. The average particle diameter of primary particles is 0.05 to 0.3 $\mu$m. The particles have a shape of octahedral form. The particles are produced preferably through wet oxidation. No firing process is performed. The particles contain substantially no metal elements other than cobalt and manganese. The complex oxide particles of the present invention are suitably used as a black pigment for coating material, ink, toner, and rubbers or plastics.

## Description

Technical Field

The present invention relates to black complex oxide particles and a process for producing the same. Further, the present invention relates to a black paste containing the black complex oxide particles. Still further, the present invention relates to black matrixes formed from the black paste.

Background Art

A black pigment used for coating material, ink, toner, rubbers, plastics and the like is required to have excellent performances in blackness, hue, tinting strength, or hiding power as well as low cost. As the black pigment, carbon black or metal oxide pigments such as iron oxide-based pigments including magnetite and the other complex oxide pigments have been used for each purpose.

Nowadays, in any application areas described above, request has directed to high performance and high quality. For example, a black pigment containing metal oxide as a main component has been requested to have not only an excellent blackness but also excellent performances in oxidation resistance required in firing process in the production of black matrixes used for flat panel displays, dispersibility in vehicles required in the preparation of a coating material using resin, solvent and others, or surface smoothness of a coating film prepared from the coating material. As a typical example of the black pigment that contains a metal oxide as a main component, there may be listed particles of a single component metal oxide such as cobalt oxide, manganese oxide or copper oxide, or particles of a complex oxide such as Cu-Cr, Cu-Mn, Cu-Cr-Mn, Cu-Fe-Mn, Co-Mn-Fe or Co-Fe-Cr oxide (For example, refer to Japanese Patent Laid-Open Publication No. H9-237570, Japanese Patent Laid-Open Publication No. H10-231441, and U.S. Pat. No. 5,814,434).

Regarding particles of a single component metal oxide, particles having a large diameter provide higher blackness, but particles having a diameter in a submicrometer level exhibit a brown tint. In addition, particles having a particle size in a submicrometer level are not easy to produce.

Regarding particles of a complex oxide, they also have advantages and disadvantages from the standpoint of the performances required for a black pigment. For example, particles of a complex oxide such as Cu-Cr or Cu-Cr-Mn oxide which contains chromium have, in addition to the problem of chromium toxicity, such a disadvantage that particles having a diameter in a submicrometer level are not easy to produce.

Particles of a Cu-Mn complex oxide as disclosed in Japanese Patent Laid-Open Publication No. H9-237570 may easily be processed into microparticles, but tend to have an irregular form. Also, they easily aggregate, resulting in poor dispersibility in the preparation of a coating material and poor surface smoothness of a coating film. In addition, black particles of a Cu-Mn complex oxide are not obtained without a firing process. Firing causes sintering among the particles.

Particles of a Cu-Fe-Mn complex oxide as disclosed in the aforementioned Japanese Patent Laid-Open Publication No. H9-237570 are uniform in shape and excellent in dispersibility and blackness. Particles of a Co-Mn-Fe complex oxide as disclosed in the aforementioned Japanese Patent Laid-Open Publication No. H10-231441 are uniform in shape and excellent in dispersibility. However, because both particles described above contain iron, they are inferior in weatherability and also said to be inferior in oxidation resistance. The reason for this is that the blackness depends on $Fe^{2+}$, which is easily degraded with time.

As mentioned above, there have not been known to date a satisfactory black pigment containing a metal oxide as a main component, which is excellent in blackness, oxidation resistance, dispersibility in the preparation of a coating material, and surface smoothness of a coating film prepared from the coating material. It is therefore an object of the present invention to provide a material that meets these requests.

Disclosure of the Invention

As a result of intensive studies on various kinds of black metal oxides, the present inventors have found that the above object is accomplished with specific complex oxide particles of Co-Mn, and completed the present invention.

Namely, the above object is accomplished with specific black complex oxide particles that contain 35 to 70 % by weight of cobalt and 5 to 40 % by weight of manganese, having a cobalt to manganese molar ratio Co/Mn of 0.5 to 14, a particle diameter of 0.05 to 0.3 $\mu$m that is averaged for the number of the primary particles observed with a scanning electron microscope, and a shape of octahedral form. Further, the present invention provides a black paste containing the specific black complex oxide particles, and a black matrix that is formed from the black paste.

Still further, the present invention provides a preferable process of producing the foregoing black complex oxide particles, wherein an aqueous solution of mixed metal salt dissolving water-soluble cobalt and manganese salts is mixed and neutralized with alkali; the resultant metal hydroxide slurry is oxidized with an oxidizing gas while the temperature is kept at 60 to 95°C and the pH at 10 to 13.

Best Mode for Carrying Out the Invention

Preferred embodiments for carrying out the present invention will hereinafter be described. The black complex oxide particles of the present invention have a black hue and contain cobalt and manganese. The black complex oxide particles of the present invention, as is clear from the production process described later, are characterized by having a high blackness and a high heat resistance even though the particles are produced without a firing process. Further, the particles are characterized also by having a shape of octahedral form.

The black complex oxide particles of the present invention have a shape of octahedral form so as to allow the particles to have high blackness and heat resistance. As a result of an examination performed by the present inventors, it has been found that complex oxide particles exhibit high crystallinity and attain high blackness and heat resistance when the particles contain cobalt and manganese and have a shape of octahedral form. Further, it has been also found that, owing to the shape of octahedral form, the particles do not easily dropped off from a coating film prepared from a paste containing the particles. The complex oxide particles having a shape of octahedral form can be produced preferably in accordance with the production process described later.

It is important that the black complex oxide particles of the present invention are fine particles, although this relates to the particle shape. Specifically, the particle diameter averaged for the number of primary particles observed with a scanning electron microscope (hereinafter, abbreviated as SEM) is 0.05 to 0.3 $\mu$m, and preferably 0.10 to 0.2 $\mu$m. A coating film prepared from a coating material containing such fine black complex oxide particles has a desirable surface smoothness and a high gloss. As described later, the black complex oxide particles of the present invention are produced without a firing process, so that the particles are less aggregated and fine particles are easy to be generated.

Regarding the composition of the black complex oxide particles according to the present invention, the black complex oxide particles contain cobalt in an amount of 35 to 70 % by weight, and preferably 40 to 70 % by weight. When the cobalt content is less than 35 % by weight, heat resistance and electrical resistance become lowered. When the cobalt content exceeds 70 % by weight, blackness becomes lowered.

The manganese content in the black complex oxide particles according to the present invention is 5 to 40 % by weight, and preferably 10 to 35 % by weight. When the manganese content is less than 5 % by weight, blackness becomes lowered. When the manganese content exceeds 40 % by weight, black hue becomes poor and heat resistance and electrical resistance become lowered.

In the black complex oxide particles of the present invention, the ratio of cobalt and manganese that are the essential metallic components is also important. When the cobalt/manganese molar ratio Co/Mn is 0.5 to 14, and preferably 1 to 6, black complex oxide particles having a shape of octahedral form are advantageously obtained, and an adequate balance between blackness and electrical resistance is also advantageously obtained. Specifically, when the cobalt/manganese molar ratio is less than 0.5, blackness may become lowered. When the molar ratio exceeds 14, black hue becomes poor and heat resistance and electrical resistance may become lowered.

The black complex oxide particles of the present invention preferably have a sharp particle size distribution on the basis of the number of primary particles observed with SEM. The width of the particle size distribution is generally represented by a coefficient of variation. The coefficient of variation (%) is calculated by (standard deviation / particle diameter averaged for the number of primary particles observed with SEM) $\times$ 100. A large coefficient of variation means a broad particle size distribution. On the other hand, a small coefficient of variation means a sharp particle size distribution. In the present invention, the coefficient of variation (CV value) for the primary particle diameter in the particle size distribution on the basis of the number of primary particles observed with SEM is preferably as low as 40% or lower, and furthermore preferably 30 % or lower. The coefficient of variation is calculated from the standard deviation and the particle diameter averaged for a specific number (for example, 200 particles in the examples described later) of primary particles observed with SEM.

Further, in addition to having an average particle diameter of primary particles within the aforementioned range, the black complex oxide particles of the present invention preferably have a small maximum particle diameter $D_{max}$ of aggregated particles on the basis of their number. Because of this, dropping off of the particles from a coating film can be more effectively prevented. From this viewpoint, the maximum particle diameter $D_{max}$ of aggregated particles on the basis of their number is preferably 4 $\mu$m or less, and particularly preferably 3 $\mu$m or less. There is no particular limitation on the lower limit of the maximum particle diameter $D_{max}$. The smaller the better, but at around 0.2 $\mu$m, dropping off of the particles from a coating film can be effectively prevented. The maximum particle diameter $D_{max}$ of aggregated particles is measured with a laser diffraction/scattering particle size distribution analyzer.

In the black complex oxide particles of the present invention, the $D_{50}$ value of aggregated particles in the aforementioned particle size distribution on the basis of the number of the particles is preferably 0.1 to 1.5 $\mu$m. It is difficult to attain a value of the $D_{50}$ less than 0.1 $\mu$m, considering the particle size of the primary particles. On the other

hand, when the $D_{50}$ value exceeds 1.5 $\mu$m, the particles aggregate too strong, so that their dispersibility becomes inadequate for any of various applications. The $D_{50}$ value of the aggregated particles is measured with a laser diffraction/ scattering particle size distribution analyzer.

The black complex oxide particles of the present invention have high particle dispersibility, although the dispersibility relates to the particle shape and diameter. When the dispersibility is evaluated in terms of specular reflectivity, the black complex oxide particles of the present invention preferably have a specular reflectivity value of 70 or more, particularly as high as 85 or more.

The black complex oxide particles of the present invention have an amount of oil absorption of preferably 10 to 40 ml/100 g, and more preferably as low as 15 to 30 ml/100 g, although the amount of oil absorption relates to the specular reflectivity. The black complex oxide particles of the present invention having such low amount of oil absorption contain reduced amount of aggregated particles, and thus adequate dispersibility is provided in the preparation of a coating material.

The black complex oxide particles of the present invention are also characterized by being low magnetic. Owing to being low magnetic, the particles are not easy to aggregate, exhibiting adequate dispersibility. From this viewpoint, the black complex oxide particles preferably have a saturation magnetization of 3 $Am^2$/kg or less at 796 kA/m, and particularly 2 $Am^2$/kg or less. There is no particular limitation on the lower value of the saturation magnetization. The smaller the better, but at around 0.1 $Am^2$/kg of the saturation magnetization, aggregation of the particles can be effectively prevented.

The black complex oxide particles of the present invention preferably contain as metallic components only cobalt and manganese mentioned above and preferably do not substantially contain the other heavy metal elements that have large environmental load or the like. In the case where the other metal is admixed, the metal is preferably a light metal element with an atomic number of 20 or smaller. In the case where the black complex oxide particles contain a light metal element other than cobalt and manganese, the content of the light metal element is preferably 0.05 to 5 % by weight, and particularly preferably 0.1 to 3 % by weight.

The black complex oxide particles of the present invention are also characterized by having a small BET specific surface area. Though the reason why the small specific surface area is attained is not clear, it has been found that the production process described later provides the black complex oxide particles with a small BET specific surface area. The BET specific surface area of the black complex oxide particles is preferably as low as 5 to 30 $m^2$/g, and more preferably 10 to 25 $m^2$/g. A small specific surface area is advantageous, because the particles are affected less by the surrounding environment, particularly by humidity. Namely, the black complex oxide particles of the present invention are less hygroscopic.

In relation to being less hygroscopic, the black complex oxide particles of the present invention have a high volumetric electrical resistance. Specifically, at 25°C and RH of 55 %, the volumetric electrical resistance is preferably $1 \times 10^4$ $\Omega \cdot$cm or higher, more preferably $1 \times 10^4$ to $1 \times 10^8$ $\Omega \cdot$cm, and still more preferably $1 \times 10^5$ to $1 \times 10^8$ $\Omega \cdot$cm. High volumetric electrical resistance is advantageous, because reliable inter-electrode insulation can be attained when the black complex oxide particles are used for black matrixes.

The black complex oxide particles of the present invention are also characterized by having high blackness. Specifically, it is noted that particles with high blackness can be obtained without a firing process. Generally, the blackness of complex oxide particles containing no iron is enhanced by a firing process. On the other hand, in the present invention, a particle having satisfactory blackness can be attained without a firing process by employing the production process described later. The blackness of the particles is evaluated in accordance with JIS K5101-1991. The "L" value of the particles as measured with a color difference meter is as low as 20 or less. Further, the "a" value is as low as 0.1 or less, and the "b" value is as low as 0.1 or less.

In addition to high blackness, the black complex oxide particles of the present invention are also characterized by having high heat resistance. Here, the heat resistance signifies that the blackness is not lowered by heat. As a measure of heat resistance, "$\Delta E$" value as defined by the following equation is employed in the present invention.

$$\Delta E = (\Delta L^2 + \Delta a^2 + \Delta b^2)^{1/2}$$

In the equation, $\Delta L$, $\Delta a$, and $\Delta b$ represent the differences in the "L", "a", and "b" values, respectively, before and after heating at 600 °C for 1 hr in the air.

The black complex oxide particles of the present invention preferably have a $\Delta E$ value of 0.5 or less, and particularly as low as 0.3 or less. As is clear from the results of Comparative Example 1 described later, the complex oxide particles of Co-Mn-Fe descried in the aforementioned Japanese Patent Laid-Open Publication No. H10-231441 was produced with a firing process, but the particles had a $\Delta E$ value of as large as 4.01, namely poor heat resistance. The reason why the black complex oxide particles of the present invention have high heat resistance is not clear, but this high heat resistance might be derived from a production process of the black complex oxide particles in which material composed of a binary system of cobalt and manganese is used and the wet oxidation process is employed as described later.

Hereinafter, a preferred process for producing black complex oxide particles according to the present invention will be described. The process is roughly divided into two processes: (a) preparation of metal hydroxide slurry and (b) wet oxidation. The process is characterized by performing no firing after the wet oxidation. Each process will be explained as follows.

Firstly, the process (a) is explained. Metal hydroxide slurry is prepared by mixing and neutralizing an aqueous solution of mixed metal salts dissolving water-soluble cobalt and manganese salts with alkali. In more detail, alkali is gradually added to an aqueous solution of mixed metal salts so as to obtain metal hydroxide slurry. There is no particular limitation on the duration of addition of alkali, but it is preferably 60 to 120 minutes from the viewpoint of formation of uniform metal hydroxide nuclei. Too short duration of addition of alkali results in the formation of metal hydroxides with a non-uniform composition, and particles shaped in an irregular form are likely to be generated. Too long duration of addition of alkali leads to the formation of metal hydroxides with a uniform composition, but nuclei growth is also progressed and therefore particles shaped in an irregular form are likely to be generated.

In the preparation of metal hydroxide slurry, temperature regulation is also important. When the temperature is too low in the preparation, a large amount of metal hydroxide nuclei are generated, which is caused by the solubility, and eventually the particle size distribution of the resultant complex oxide particles becomes broad. From this viewpoint, the aqueous solution of mixed metal salts is mixed with alkali preferably at a temperature of 60 to 90°C, and particularly preferably 70 to 90°C.

As the water-soluble metal salts of cobalt and manganese, there may be listed, for example, sulfates, nitrates, carbonates, chlorides or the like. The metal ion concentration in the aqueous solution of mixed metal salts may be regulated around 0.5 to 2.0 mol/L in terms of the total ion concentration, considering productivity or the like. The molar ratio of cobalt ion to manganese ion in the aqueous solution of mixed metal salts affects the composition of resultant complex oxide particles. The molar ratio of cobalt ion/manganese ion is preferably 0.5 to 14, and particularly preferably 1 to 6.

Caustic alkali such as sodium hydroxide or potassium hydroxide is preferably used as the alkali. The alkali hydroxide concentration is preferably around 0.5 to 2.0 mol/L. The added amount of alkali hydroxide is preferably regulated in such a manner that the pH of the resultant metal hydroxide slurry becomes around 10 to 13.

Secondly, the process (b) is explained. After the metal hydroxide slurry is obtained, an oxidative gas is blown into the slurry. Through this wet oxidation process, complex oxide particles are obtained. As a typical oxidative gas, the air is used, but the other oxygen-containing gases may be used. In the wet oxidation process, the slurry temperature control is important. Specifically, the metal hydroxide slurry is subjected to the wet oxidation while the temperature of the slurry is kept at 60 to 95°C, and preferably 70 to 95°C. The wet oxidation performed outside of this temperature range is likely to bring about microparticulation of the resultant complex oxide particles. Irregular form particles are also likely to be generated.

In the wet oxidation process, control of the pH of the slurry is also important. In the present production process, the wet oxidation is performed while the slurry is kept at a relatively high pH of 10 to 13, and preferably 11 to 13.

The wet oxidation is continued until oxidation-reduction potential in the slurry reaches an equilibrium.

After the wet oxidation is completed, the slurry containing the complex oxide particles are subjected to filtration, washing, and dehydration using conventional methods. Then, the slurry is dried at 50 to 120°C and deagglomerated. In the production of complex oxide particles that contain no iron, generally the particles are allowed to get a black hue by firing thereafter. As opposed to this, in the present production process, black particles can be obtained without firing, only through wet oxidation. This is an advantage of the present production process. Production without a firing process is advantageous from the viewpoint of production efficiency or energy loss. In addition, it is advantageous that no sintering of the particles occurs.

The black complex oxide particles thus obtained are, by taking the advantage of high blackness, suitably used as a black pigment for coating material, ink, toner, and rubbers or plastics. For example, the black complex oxide particles are mixed with various kinds of organic solvents to yield black slurry. Also, the black complex oxide particles are mixed with known components forming coating films such as resins and glass frits (glass powder) to yield a black paste. The black paste is suitably used to form black matrixes for flat display panels. Further, the black paste is used to form a black electrode or a light-shielding layer for front panels of plasma displays, plasma addressed liquid crystal displays or the like.

Examples

The present invention will now be illustrated in greater detail with reference to examples. However, it should be construed that the invention is in no way limited to those examples.

EXAMPLE 1

Cobalt sulfate heptahydrate and manganese sulfate pentahydrate each in an amount as shown in Table 1 were put in 6 liters of water and dissolved by stirring. To the resultant aqueous solution of mixed metal salts, 10 liters of a 1 mol/L caustic soda aqueous solution were added over about 90 minutes. The pH of the resultant hydroxide slurry was 12. During the addition of the caustic soda, the temperature of the slurry was kept at 65°C. In this way, metal hydroxide slurry was obtained.

While the temperature of the resultant metal hydroxide slurry was kept at 65°C, the air was blown into the slurry at a rate of 3 L/minute for 2 hours. As a result, slurry of black complex oxide particles was obtained. After the air blowing was stopped, the reaction solution was continuously stirred and the temperature was elevated to 85°C over about 60 minutes, followed by aging the slurry for 1 hour at 85°C. Subsequently, the resultant complex oxide particle slurry was filtered off and washed. The washed solid cake was dried at 80°C for 10 hours, and then the dried cake was deagglomerated.

Evaluation of properties

The following evaluations were carried out for the resultant complex oxide particles. The results are shown in Tables 2 and 3.

(1) Co and Mn content:

A sample was dissolved and measured with ICP.

(2) Average particle diameter, shape and the coefficient of variation of primary particles, and maximum particle diameter $D_{max}$ and $D_{50}$ of aggregated particles:

The average particle diameter and shape of the primary particles were evaluated by taking a picture of the particles with SEM at a magnification of 100,000; selecting randomly 200 particles from the picture; and then inspecting and measuring the particles. The coefficient of variation was evaluated as follows: the standard deviation of measured values of the primary particle diameter was obtained; and then the coefficient was calculated in accordance with the formula of (standard deviation / average particle diameter of primary particles) $\times$ 100. The maximum particle diameter $D_{max}$ and $D_{50}$ of aggregated particles were evaluated with "LS230" (trade name) supplied by BECKMAN COULTER Co., Ltd. A sample was preliminary treated by putting it in an aqueous solution containing sodium hexametaphosphate as a dispersant, and sonicating the solution for 5 minutes to obtain a sample suspension. The sodium hexametaphosphate concentration in the suspension was selected to be 1 % by weight.

(3) BET specific surface area: measured with BET surface area analyzer (model 2200) supplied by Shimadzu-Micrometrics Corp.

(4) Amount of oil absorption: measured in accordance with JIS K5101.

(5) Volumetric electrical resistance:

A sample was exposed to an atmosphere of 25°C and RH of 55% for 24 hours in a chamber. Then, 10 g of the sample after exposure were put in a holder and molded into a 25 mm diameter tablet at a pressure of 600 kg/cm$^2$. Electrodes were mounted to the tablet, and electrical resistance was measured at a pressure of 150 kg/cm$^2$. Volumetric electrical resistance was obtained from the thickness, cross-sectional area, and electrical resistance of the tablet.

(6) Blackness, Hue: measured in accordance with JIS K-1991.
To 2.0 grams of a sample were added 1.4 cc of castor oil, and the resultant mixture was kneaded with a Hoover automatic muller; to 2.0 grams of the kneaded sample were added 7.5 grams of lacquer; after the sample was further kneaded, it was coated on a mirror-coated paper with a 4 mil applicator. After the coating was dried, blackness ("L" value) and hue ("a" value, "b" value) were measured with a color difference meter (color analyzer-TC-1800, supplied by TOKYO DENSHOKU CO., LTD.). Regarding the heat treatment (600°C for 1 hour) of the sample, the sample was put in an alumina dish and heated in the air in an electrical muffle furnace "FUW230A" (trade name) supplied by ADVANTEC Corp.

(7) Heat resistance ΔE:

ΔE is calculated from the following equation. In the equation, ΔL, Δa, and Δb represent the differences in the "L", "a", and "b" values, respectively, before and after heating at 600 °C for 1 hr in the air. The heating was performed in the same manner as described in (6).

$$\Delta E = (\Delta L^2 + \Delta a^2 + \Delta b^2)^{1/2}$$

(8) Specular reflectivity:

Sixty grams of a solution dissolving styrene-acrylic resin (TB-1000F) in toluene (resin : toluene = 1:2), 10 grams of a sample after heat treatment, and 90 grams of glass beads having a diameter of 1 mm were put in a bottle having a volume of 140 ml. After the bottle was capped, they were mixed by a coating material shaker (supplied by TOYO SEIKI KOGYO CO., LTD.) for 30 minutes. The resultant coating material was coated on a glass plate with a 4 mil applicator and dried. The reflectivity at 60 degrees was measured with a MURAKAMI GLOSS METER GM-3M.

(9) Degree of aggregation: measured with "Powder Tester Type PT-R" (trade name) supplied by HOSOKAWA MICRON Corp. at a shaking time of 65 seconds.

(10) Saturation magnetization: measured with a High Sensitivity Vibration Sample Magnetometer VSM-P7 supplied by Toei Industry Co., Ltd. at a magnetic field of 796 kA/m.

EXAMPLES 2 and 3, and COMPARATIVE EXAMPLES 1 to 4

Complex oxide particles were obtained in the same manner as described in Example 1, except that each production condition was changed as shown in Table 1. The properties of the complex oxide particles obtained were evaluated in the same manner as described in Example 1. The results are shown in Tables 2 and 3. Note that, Comparative Example 1 corresponds to the example described in the aforementioned Japanese Patent Laid-Open Publication No. H10-231441.
[Table 1]

| | | Aqueous solution of mixed metal salt | | | Metal hydroxide slurry | | | Wet oxidation | | | |
|---|---|---|---|---|---|---|---|---|---|---|---|
| | | $CoSO_4 \cdot 7H_2O$ charged amount (g) | $MnSO_4 \cdot 5H_2O$ charged amount (g) | Liquid amount (L) | Liquid amount (L) | Temperature (°C) | pH | Air blowing rate (L/min) | Air blowing time (hr) | Temperature (°C) | pH |
| Example | 1 | 672 | 140 | 6 | 16 | 65 | 12 | 3 | 2 | 65 | 12 |
| | 2 | 445 | 280 | 6 | 16 | 75 | 12 | 3 | 2 | 75 | 12 |
| | 3 | 843 | 42 | 6 | 16 | 85 | 12 | 3 | 2 | 85 | 12 |
| Comparative Example | 1 | 225 | 405 | 6 | 16 | 85 | 12 | 3 | 2 | 75 | 12 |
| | 2 | 871 | 17 | 6 | 16 | 50 | 12 | 3 | 2 | 85 | 12 |
| | 3 | 674 | 150 | 6 | 16 | 50 | 12 | 3 | 2 | 50 | 12 |
| | 4 | 899 | 0 | 6 | 16 | 50 | 12 | 3 | 2 | 50 | 12 |

[Table 2]

| | | Elemental analysis | | | Form |
|---|---|---|---|---|---|
| | | Co (wt%) | Mn (wt%) | Co/Mn molar ratio | |
| Example | 1 | 54.3 | 17.9 | 2.8 | Octahedral |
| | 2 | 35.8 | 36.1 | 0.9 | Octahedral |
| | 3 | 67.0 | 5.2 | 12.0 | Octahedral |
| Comparative Example | 1 | 18.0 | 54.3 | 0.3 | Platy |
| | 2 | 68.5 | 2.0 | 31.9 | Irregular |
| | 3 | 43.6 | 14.9 | 2.7 | Irregular |
| | 4 | 68.7 | 0.0 | - | Platy |

[Table 3]

| | | Average primary particle diameter ($\mu$m) | Laser diffraction particle size | | Coefficient of variation of particle size distribution on the basis of the number of primary particles (%) | Amount of oil absorption (ml/100g) | Volumetric electrical resistance ($\Omega \cdot$cm) | Saturation magnetization (Am$^2$/kg) | BET specific surface area (m$^2$/g) | Initial | | | After 600°C, 1hr | | | $\Delta$E | Specular reflectivity (%) | Degree of Aggregation (%) |
|---|---|---|---|---|---|---|---|---|---|---|---|---|---|---|---|---|---|---|
| | | | $D_{max}$ ($\mu$m) | $D_{50}$ ($\mu$m) | | | | | | Blackness L | Hue a | Hue b | Blackness L | Hue a | Hue b | | | |
| Example | 1 | 0.14 | 1.8 | 0.18 | 25 | 20 | $6.5 \times 10^4$ | 0.3 | 14.4 | 19.6 | 0.1 | 0.1 | 20.9 | 0.0 | 0.2 | 0.22 | 85 | 25 |
| | 2 | 0.30 | 2.2 | 0.35 | 30 | 16 | $6.0 \times 10^4$ | 0.4 | 7.0 | 19.8 | 0.0 | 0.1 | 20.4 | 0.2 | 0.6 | 0.30 | 80 | 30 |
| | 3 | 0.10 | 0.9 | 0.12 | 30 | 23 | $8.7 \times 10^4$ | 0.3 | 19.5 | 19.9 | 0.1 | 0.1 | 21.0 | 0.1 | 0.2 | 0.14 | 80 | 30 |
| Comparative Example | 1 | 0.20 | 4.5 | 0.86 | 45 | 27 | $2.4 \times 10^5$ | 0.3 | 19.5 | 22.0 | 0.6 | 1.2 | 23.0 | 1.0 | 1.7 | 1.19 | 60 | 50 |
| | 2 | 0.15 | 6.8 | 1.45 | 54 | 42 | $9.0 \times 10^6$ | 0.3 | 35.0 | 24.0 | 1.0 | 1.4 | 23.1 | 0.6 | 1.1 | 1.03 | 55 | 60 |
| | 3 | 0.13 | 8.4 | 1.36 | 60 | 66 | $5.0 \times 10^4$ | 0.4 | 73.1 | 22.0 | 0.3 | 0.5 | 20.8 | 0.1 | 0.4 | 1.22 | 50 | 55 |
| | 4 | 0.12 | 5.8 | 0.65 | 56 | 50 | $8.0 \times 10^5$ | 0.5 | 60.0 | 26.0 | 0.4 | 0.6 | 20.8 | 0.1 | 0.7 | 5.21 | 55 | 60 |

As is clear from the results shown in Tables 2 and 3, the black complex oxide particles of Examples have an adequate balance between high blackness (lower "L" value) and high heat resistance (smaller $\Delta$E) as compared with the complex oxide particles of Comparative Examples. Further, the particles of Examples have smaller specific surface area. Still further, the particles of Examples have high volumetric electrical resistance and adequate dispersibility (namely, having high specular reflectivity, low amount of oil absorption, and low saturation magnetization).

Industrial Applicability

As mentioned above in detail, the black complex oxide particles according to the present invention have high blackness and heat resistance, and are not easy to drop off from a coating film containing the particles owing to the shape of octahedral form. As a result, the black complex oxide particles are suitably used as a black pigment for coating material, ink, toner, and rubbers or plastics. In particular, the particles are suitably used for a color composition that forms black matrixes of flat panel displays, or for a color composition that forms a black electrode or a light shielding layer of front panels of plasma displays or plasma addressed liquid crystal displays. Black matrixes, and a black electrode and a light shielding layer of front panels of plasma displays or plasma addressed liquid crystal displays that are formed from a black paste containing the black complex oxide particles are excellent in blackness, heat resistance, and uniformity and gloss of a fired coating film.

**Claims**

1. Black complex oxide particles comprising 35 to 70 % by weight of cobalt and 5 to 40 % by weight of manganese, having a cobalt to manganese molar ratio Co/Mn of 0.5 to 14, a particle diameter of 0.05 to 0.3 $\mu$m averaged for the number of primary particles observed with a scanning electron microscope, and a shape of octahedral form.

2. The black complex oxide particles according to claim 1, wherein the coefficient of variation of primary particle diameter in a particle size distribution on the basis of the number of primary particles observed with a scanning electron microscope is 40% or less.

3. The black complex oxide particles according to claim 1, wherein the maximum particle diameter $D_{max}$ of aggregated particles in the particle size distribution on the basis of the number of particles, as measured by laser diffraction scattering method, is 4 $\mu$m or less.

4. The black complex oxide particles according to claim 1, having a volumetric electrical resistance of $1 \times 10^4$ $\Omega\cdot$cm or more.

5. The black complex oxide particles according to claim 1, wherein the black complex oxide particles are produced without a firing process.

6. The black complex oxide particles according to claim 1, comprising substantially no metal elements other than cobalt and manganese.

7. The black complex oxide particles according to claim 1, having a saturation magnetization of 3 $Am^2$/kg or less.

8. The black complex oxide particles according to claim 1, having a BET specific surface area of 5 to 30 $m^2$/g.

9. Black slurry comprising the black complex oxide particles according to claim 1 and an organic solvent.

10. A black paste comprising:

   the black complex oxide particles according to clam 1;
   a coating film-forming component including a resin; and
   a glass frit.

11. A black matrix formed from the black paste according to claim 10.

12. A process for producing the black complex oxide particles according to claim 1, comprising:

   mixing and neutralizing an aqueous solution of mixed metal salts dissolving water-soluble cobalt and manganese salts with alkali; and
   oxidizing the resultant metal hydroxide slurry with an oxidative gas while the temperature is kept at 60 to 95°C and the pH is kept at 10 to 13.

<p align="center">**INTERNATIONAL SEARCH REPORT**</p>

| | International application No. |
|---|---|
| | PCT/JP2006/306137 |

**A. CLASSIFICATION OF SUBJECT MATTER**
*C01G51/00*(2006.01), *C09D17/00*(2006.01)

According to International Patent Classification (IPC) or to both national classification and IPC

**B. FIELDS SEARCHED**

Minimum documentation searched (classification system followed by classification symbols)
*C01G51/00*(2006.01), *C09D17/00*(2006.01)

Documentation searched other than minimum documentation to the extent that such documents are included in the fields searched
Jitsuyo Shinan Koho      1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-20119 A (Mitsui Mining & Smelting Co., Ltd.), 23 January, 2002 (23.01.02), Claims; examples; tables 1 to 2 (Family: none) | 1-12 |
| A | JP 10-231441 A (Dainichiseika Color & Chemicals Mfg. Co., Ltd.), 02 September, 1998 (02.09.98), Claims; examples; table 1 (Family: none) | 1-12 |
| A | JP 9-124972 A (Dainichiseika Color & Chemicals Mfg. Co., Ltd.), 13 May, 1997 (13.05.97), Par. Nos. [0052] to [0063] & EP 740183 A1      & US 5814434 A | 1-12 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search 12 June, 2006 (12.06.06) | Date of mailing of the international search report 20 June, 2006 (20.06.06) |
|---|---|
| Name and mailing address of the ISA/ Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/306137 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 49-6040 B1  (Commissariat a L'Energie Atomique),<br>12 February, 1974 (12.02.74),<br>Claims; column 20, lines 26 to 38<br>& GB 1282307 A | 1-12 |

Form PCT/ISA/210 (continuation of second sheet) (April 2005)

**EP 1 873 118 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H9237570 A
- JP H10231441 A
- US 5814434 A